## Europäisches Patentamt
## European Patent Office
## Office européen des brevets

(11) Numéro de publication: **0 032 476**
A2

(12) **DEMANDE DE BREVET EUROPEEN**

(21) Numéro de dépôt: 81420002.8

(22) Date de dépôt: 07.01.81

(51) Int. Cl.³: **B 25 B 1/24**
**B 25 B 1/22**

(30) Priorité: 10.01.80 FR 8000757

(43) Date de publication de la demande:
22.07.81 Bulletin 81/29

(84) Etats contractants désignés:
AT BE CH DE GB IT LI LU NL SE

(71) Demandeur: Société DOLEX (SARL.)
Zône Industrielle du Coin
F-42401 Saint-Chamond(FR)

(72) Inventeur: Pontvianne, Michel
31 allée des Alouettes
L'Horme F-42400 Saint-Chamond(FR)

(74) Mandataire: Buttet, Roger et al,
"Cabinet Charras" 3, Place de l'Hôtel-de-Ville
F-42000 Saint-Etienne(FR)

(54) Etau à plusieurs capacités d'ouverture maximum et à effets de serrage multiples.

(57) La mâchoire mobile (2) et/ou la partie supérieure (9) du corps de l'étau portant la mâchoire fixe, sont agencées pour être déplacées angulairement par rapport au corps (1) qui la porte ou les porte, la partie supérieure (9) présentant des mâchoires fixes sur un ou plusieurs côtés, chaque mâchoire fixe se trouvant espacée différemment par rapport au centre de la tourelle, de sorte que pour chaque position angulaire prédéterminée de la tourelle, on modifie la capacité d'ouverture maximum entre les mâchoires fixe et mobile.

FIG.1

EP 0 032 476 A2

– 1 –

## Etau à plusieurs capacités d'ouverture maximum et à effets de serrage multiples.

L'invention concerne un étau à plusieurs capacités d'ouverture maximum et à effets de serrage multiples.

On connaît des étaux parallèles correspondant au préambule de la revendication 1, fixés le plus souvent sur des établis, tables ou machines, Brevet DE 825.380 (PLANKEN), Brevet GB 694.349 (KRCHNYAK), Brevet FR 2.222.175 (LAMBERT), Brevet GB 177.843 (PETZ), qui comprennent généralement deux mâchoires et mors parallèles, dont l'une est fixe et l'autre mobile, des moyens complémentaires pour guider les mâchoires l'une par rapport à l'autre dans leurs déplacements parallèles, des moyens complémentaires pour commander et régler à volonté l'écartement des mâchoires, la mâchoire fixe étant montée pivotante sur un corps dont la partie inférieure présente une semelle ou des dispositions pour fixer l'étau sur un support d'une manière orientable ou non.

De tels étaux présentent l'inconvénient d'avoir une capacité de serrage maximum, relativement trop limitée dans de nombreuses utilisations. De plus, si l'on veut procéder à des travaux avec serrages spéciaux : serrage de pièces ayant une position angulaire par rapport aux mâchoires, serrage de piècesavec guidage pour les couper obliquement (coupe à onglets), serrage de tubes pour les redresser, les cintrer, les cambrer..., on doit disposer d'appareils conçus et exécutés pour ces travaux, qui sont indépendants des étaux.

La présente invention a pour but de remédier à ces inconvénients. L'invention, telle qu'elle est caractérisée dans les revendications, résout le problème consistant à créer un étau à plusieurs capacités d'ouverture maximum et à effets de serrage multiples, établi avec une mâchoire mobile et/ou une partie supérieure du corps portant la mâchoire fixe, agencées pour être déplacées angulairement par rapport au corps qui la porte ou les porte, en modifiant ainsi pour chacune des positions angulaires relatives des mâchoires, la capacité d'ouverture maximum entre lesdites mâchoires, la partie supérieure du corps étant agencée pour coopérer avec la mâchoire mobile.

Suivant une autre caractéristique, l'étau présente une tourelle rapportée qui, vue en plan, a un profil triangulaire, carré, rectangulaire ou polygonal régulier ou irrégulier, tout en étant montée pivotante autour d'une portée disposée à la partie supérieure du corps, ou mobile angulairement par rapport à ladite partie supérieure, la tourelle étant en outre conformée pour présenter, au moins sur un côté, une mâchoire fixe dont la position par rapport à la mâchoire mobile peut être modifiée par le déplacement angulaire de la tourelle, en modifiant sensiblement l'ouverture maximum entre les mâchoires ; des moyens complémentaires de positionnement ou d'indexation, ferme et précis, étant prévus et formés sur le corps et la tourelle.

Selon une autre caractéristique, la tourelle présente une seule mâchoire fixe se trouvant en saillie, en élévation par rapport à la face supérieure de la tourelle, les deux faces de ladite mâchoire équipées ou non de mors de serrage, pouvant être utilisées alternativement en pivotant la tourelle de 180 degrés, en modifiant sensiblement la capacité d'ouverture maximum entre les mâchoires.

Suivant une autre caractéristique, le corps est ouvert sur deux ou trois côtés, dans une partie de sa hauteur, et présente un pivot central autour duquel sont axés la mâchoire mobile avec les moyens complémentaires de guidage, de commande et de réglage de l'écartement des mâchoires, plusieurs côtés de la partie supérieure du corps, présentant chacun au niveau de la mâchoire mobile, une mâchoire fixe ou des parties fixes convenablement agencées, pour l'appui et la coopération avec la machoire mobile pivotante ; chaque mâchoire fixe ou partie fixe, pouvant être espacée différemment par rapport au pivot central, de sorte que pour chaque position angulaire de la mâchoire mobile, on modifie la capacité d'ouverture maximum entre les mâchoires.

Ces caractéristiques et d'autres encore se rapportant notamment à la possibilité donnée par l'étau pour faire des onglets, au serrage des pièces en positions angulaires, au cintrage des tubes, au chanfreinage, à des facilités pour mesurer..., ressortiront de la description qui suit.

Pour fixer l'objet de l'invention, sans toutefois le limiter, aux figures des dessins annexés :

La figure 1 est une vue en perspective illustrant les éléments séparés et alignés dans leur ordre de montage, composant un exemple de réalisation d'étau.

La figure 2 est une vue en coupe longitudinale de l'étau selon la figure 1.

La figure 3 est une vue en coupe transversale considérée suivant la ligne 3-3 de la figure 2.

La figure 4 est une vue en coupe longitudinale de l'étau dans une autre forme de réalisation.

La figure 5 est une vue en plan correspondant à la figure 4. On a illustré en traits interrompus, deux positions différentes de la mâchoire mobile.

Les figures 6 à 11 sont des vues illustrant différentes utilisations de l'étau.

Selon la présente invention et dans l'exemple nullement limitatif illustré aux figures des dessins, cet étau comprend en premier lieu un corps 1 constitué d'une semelle 1a de fixation sur un établi, une table de machine ou autre support, directement ou par l'intermédiaire d'une base tournante. Etant entendu que d'autres moyens de fixation peuvent être prévus, tels que : griffes, pinces, glissières, socle...

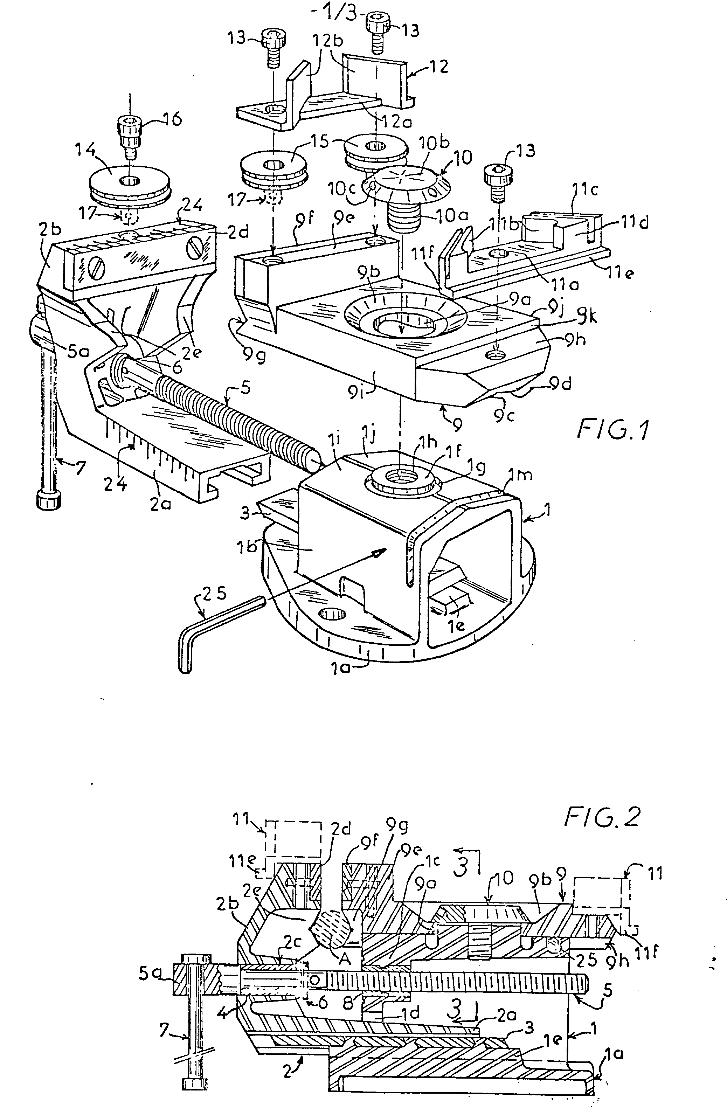

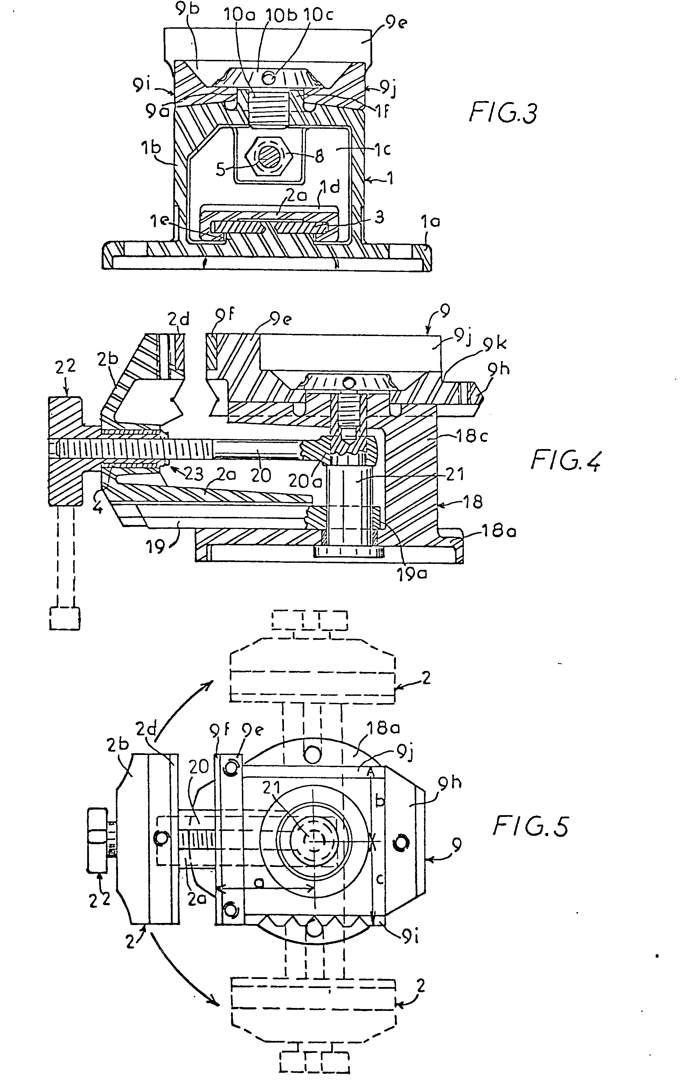

Au-dessus de la partie de fixation, le corps 1 forme de manière connue, un bloc 1b ouvert longitudinalement de part en part, avec à l'avant, c'est à dire du côté d'engagement de la mâchoire mobile 2, une paroi 1c ouverte en 1d à la partie inférieure, pour le passage de la coulisse 2a de la mâchoire mobile et de la glissière de guidage de ladite coulisse (figures 2 et 3). Dans cet exemple, la glissière est constituée par une règlette 3 débordante, de section rectangulaire ou ronde, et fixée à demeure ou de manière démontable sur une saillie longitudinale 1e du corps, de section rectangulaire de largeur plus réduite, afin de constituer une glissière en T ou analogue, pour le guidage à coulissement de la coulisse 2a de section correspondante (figure 3), fermée sur le dessus pour protéger.

La mâchoire mobile 2 présente une paroi arrière 2b alésée en 2c, pour le montage serré d'une bague 4 dans laquelle tourne librement la partie lisse d'une tige 5 retenue longitudinalement entre un épaulement arrière 5a de la tige et un dispositif à rattrapage de jeu 6, adapté sur la partie lisse à l'avant de la paroi 2b. L'épaulement 5a de la tige reçoit tout moyen de manoeuvre connu tel que levier 7, bouton cranté, volant, manivelle... (figure 2).

La partie filetée de la tige se visse dans un écrou 8 du type insert par exemple, positionné angulairement dans la paroi 1c du corps, afin que la mâchoire mobile 2 puisse être rapprochée ou éloignée du corps, par actionnement du moyen 7 et guidage de la coulisse 2a sur la glissière 1e - 3.

La partie supérieure du corps 1, c'est à dire du bloc 1b, présente une partie centrale en saillie 1f, délimitée par une gorge 1g, destinée au centrage et au pivotement d'une tourelle 9 comprenant à cet effet un alésage central 9a.

Le blocage en position de la tourelle sur le corps, peut s'opérer de différentes manières, et notamment par une vis 10 dont la partie filetée 10a se visse dans un taraudage 1h du corps, établi concentriquement à la saillie 1f, tandis que la tête élargie 10b s'appuie sur le fond d'un évidement 9b de la tourelle (figure 2). Le blocage étant assuré par tous moyens tels que levier, aspérités de préhension, ou comme illustré, par engagement d'une clé 25 dans des trous 10c réalisés à la périphérie de la tête plate 10b qui est avantageusement exécutée en matériau de bonnes caractéristiques mécaniques, afin de constituer une enclume.

Le positionnement angulaire de la tourelle 9 sur le corps 1 peut être seulement obtenu par blocage, mais de préférence, on prévoit en plus, des moyens d'indexation angulaire dans des positions déterminées.

On a illustré aux figures des dessins, une des solutions prévues qui consiste à exécuter la face supérieure du corps en deux demi-parties 1i - 1j, inversement inclinées de part et d'autre de l'axe longitudinal du corps, et de manière convexe, tandis que la face inférieure de la tourelle est formée inversement de deux demi-parties 9c - 9d, complémentaires ou en concavité, ce qui permet d'obtenir deux positions précises à 180 degrés de la tourelle sur le corps (figures 1, 6 et 7). Bien entendu, il est aisé de multiplier les faces inclinées de la tourelle et du corps, afin d'obtenir d'autres positionnements intermédiaires.

D'autre part, le positionnement angulaire précis de la tourelle sur le corps peut être réalisé par d'autres moyens, associés ou non au pivot central et au blocage, tels que des formes complémentaires multiples (saillies et creux) sur la face inférieure de la tourelle et sur la face supérieure du corps, par exemple : crabots, pions, billes à ressort, indentations, goupilles ...

La tourelle 9 présente dans l'exemple illustré, une face latérale surélevée, destinée à constituer une mâchoire fixe 9e avec, de préférence, un mors fixe 9f rapporté et situé au même niveau et parallèlement à la mâchoire mobile 2 présentant également de préférence, un mors rapporté 2d, comme il est bien connu dans les étaux parallèles.

En dessous du mors 2d, la mâchoire mobile 2 présente une forme en V femelle 2e, située au même niveau qu'une forme correspondante en V femelle 9g exécutée sur la tourelle, en dessous du mors 9f, pour serrer efficacement des pièces de profil en section particulier, et notamment des pièces de révolution A (tubes, barres...), comme illustré en traits interrompus à la figure 2.

D'une manière intéressante, on a prévu de multiplier les possibilités de serrage, en exécutant une autre face latérale de la tourelle, par exemple la face opposée à la mâchoire fixe, avec une forme en V mâle 9h, de même angle que le V femelle de la mâchoire mobile, ce qui permet de serrer de manière inclinée, une pièce B de section rectangulaire, afin par exemple, d'exécuter un chanfrein B1 (figure 11).

A noter également que les faces latérales de la tourelle, notamment les faces 9i - 9j, peuvent être équipées en mâchoires fixes avec ou sans mors, pour multiplier les possibilités de serrage.

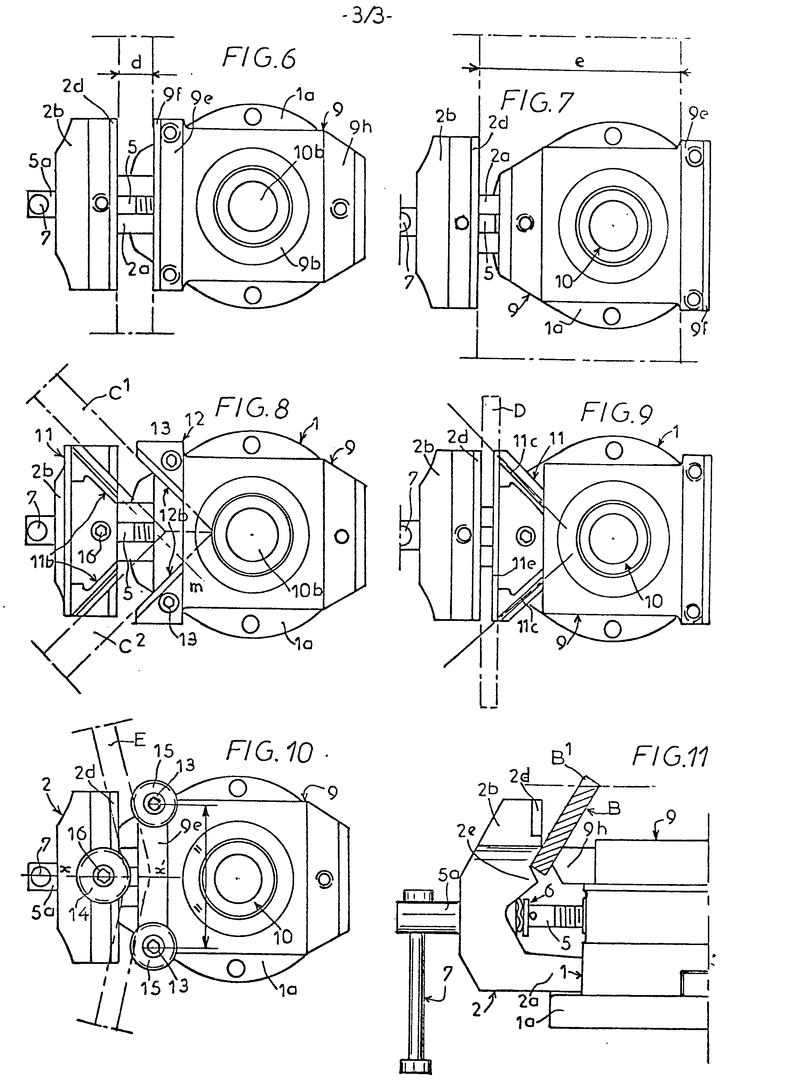

Par exemple, les mâchoires fixes 9e - 9i - 9j, peuvent avoir une face de serrage à des distances a - b - c, différentes (figure 5) par rapport à l'axe de pivotement, et des mors de natures différentes pour serrer des pièces de formes et matériaux divers.

Comme on le voit aux figures 6 et 7, le pivotement de la tourelle sur 180 degrés, permet d'obtenir des ouvertures de serrage d ou e, très différentes pour une même longueur de guidage et de vis de la mâchoire mobile. A ce propos, il faut noter que la face arrière de la mâchoire fixe 9e peut recevoir un mors de serrage.

D'autres équipements destinés à multiplier les possibilités de serrage, sont prévus, comme illustré aux figures 1, 8, 9 et 10 des dessins.

En premier lieu, on prévoit de transformer l'étau à serrage du type parallèle, en étau d'angle. Pour cela, on équipe la mâchoire mobile et l'une des mâchoires fixes de la tourelle, d'organes destinés à serrer entre eux, deux pièces C1 - C2 qui doivent être assemblées entre-elles par soudure, collage ou autre. Ces organes sont constitués d'une part, d'une pièce 11 comprenant une semelle 11a et deux montants latéraux 11b constituant un V mâle, et d'autre part, d'une pièce 12 comprenant également une semelle 12a et deux montants latéraux 12b constituant un V femelle. Il suffit de fixer par vis 13 ou autrement, la pièce 11 sur la mâchoire mobile, et la pièce 12 sur une mâchoire fixe, ou inversement, avec les V mâle et femelle en correspondance, pour serrer les pièces C1 - C2, comme illustré figure 8.

La pièce 11 peut avantageusement constituer une boîte à onglets. Pour cela, il suffit d'exécuter dans l'épaisseur des montants latéraux 11b, des entailles 11c de passage et de guidage de la lame d'une scie, et de fixer la boîte à onglets sur une des mâchoires fixes de la tourelle, ou, comme illustré à la figure 9, sur la face latérale présentant le V mâle 9h. Dans ce cas, on prend soin d'orienter la boîte à onglets avec sa face avant 11d parallèle au mors mobile 2d, par butée de sa face arrière contre un décrochement 9k de la tourelle. De plus, on prévoit un talon 11e à la partie inférieure de la face avant 11d, pour l'appui de la pièce D qui doit être serrée entre la boîte à onglets et la mâchoire mobile, et qui doit être coupée en biseau.

A noter encore que dans la position de la pièce 11 en étau d'angle (c'est à dire fixée, comme illustré figure 8), un talon arrière 11f de ladite pièce, vient en butée contre la face arrière de la mâchoire mobile 2, pour le parralélisme de la face avant de la pièce 11 avec la mâchoire fixe (figures 1 et 8).

A signaler également que pour certaines dimensions de pièces simples que l'on peut serrer en étau d'angle (figure 8), la boîte à onglets 11 peut servir à couper une pièce serrée seulement d'un côté, (avec une cale compensatrice de l'autre côté), avec une parfaite perpendicularité par rapport à l'axe longitudinal de la pièce serrée (voir tracé en traits interrompus m, figure 8), dans le cas où les V mâle et femelle des pièces 11 et 12 sont à 45 degrés, ou suivant un angle précis, si les V 11b - 12b ont une autre inclinaison.

Suivant une autre variante illustrée aux figures 1 et 10, on équipe les mâchoires fixe et mobile de l'étau, d'un dispositif de cintrage, de cambrage ou autre déformation de pièces, ou redressage.

Pour cela, on prévoit des pièces de conformation fixées de manière démontable sur lesdites mâchoires, par exemple, un galet à gorge 14, fixé dans la partie médiane de la mâchoire mobile, et deux galets à gorge 15, fixés latéralement sur l'une des mâchoires fixes de la tourelle, symétriquement de part et d'autre de l'axe x -x' (figure 10).

On comprend qu'ainsi, on peut facilement cintrer ou redresser un tube ou une barre E, entre les trois galets 14 et 15, par rapprochement de la mâchoire mobile vers la mâchoire fixe, cela jusqu'à 90 degrés environ. On peut prévoir des galets de différents diamètres de gorge. D'autre part, les galets ou pièces de conformation (cintre, V, poussoir...), sont fixés de manière démontable et à rotation libre, soit sur des axes filetés 16 (figure 1), soit sur des axes à bille-ressort 17, (traits interrompus, figure 1.

On peut encore effectuer d'autres combinaisons d'accessoires en vue de réaliser d'autres opérations. Par exemple, il est possible de monter des galets 15 ou pièces de conformation sur la mâchoire fixe, et la boîte à onglets 11 sur la mâchoire mobile, pour serrer correctement des pièces de révolution (barres, tubes), et exécuter des coupes en biseau.

Une autre variante de réalisation de l'étau suivant l'invention est illustrée aux figures 4 et 5, où l'on voit que la mâchoire mobile 2 peut prendre différentes positions angulaires par rapport au corps. A cet effet, le corps 18 est ouvert, à la partie inférieure de fixation 18a, sur trois faces (ou deux seulement), et présente une paroi arrière latérale 18b de liaison avec la partie supérieure 18c équipée d'au moins une mâchoire fixe directement formée dans le corps, ou, comme illustré, réalisée sur la tourelle 9 précitée.

La glissière 19 de guidage de la mâchoire mobile et la tige de manoeuvre 20 de la mâchoire mobile, sont dans ce cas, articulées par une extrémité 19a - 20a, sur un axe de pivotement 21 traversant les parties 18a - 18c du corps, et éventuellement bloqué par l'organe de serrage 10 de la tourelle.

La tige 20 présente sur une grande partie de sa longueur, un filetage 20b sur lequel se visse un écrou ou organe de manoeuvre 22 dont une portée 22a tourne librement dans la bague 4 de la mâchoire mobile qui est retenue longitudinalement entre un épaulement 22b de l'organe 22 et un dispositif à rattrapage de jeu 23 (figure 4).

On comprend qu'ainsi, la mâchoire mobile 2 peut tourner autour de l'axe 21 pour se présenter face à des mâchoires fixes différentes du corps (figure 5), ce qui multiplie les possibilités de serrage, en combinaison ou non avec les variantes de dimensionnement (a, b, c) desdites mâchoires fixes.

A noter encore que le corps 1 ou 18, ou la tourelle 9, peuvent avoir des formes polygonales différentes, par exemple triangulaire, carré, rectangulaire... pour s'adapter à différents problèmes de serrage.

On a également prévu de marquer de toute manière connue, sur une face latérale de la coulisse 2a et sur la face supérieure de la mâchoire mobile 2, des graduations 24 (figure 1) pour mesurer l'ouverture de serrage, les pièces à serrer et d'autres éléments tels que : tracés particuliers, longueurs de coupe...

D'autre part, les différents organes et accessoires (galets, boîte à onglets, vis centrale de blocage de la tourelle...) sont avantageusement fixés et manoeuvrés par une même clé 25 du type clé coudée à pans, que l'on peut laisser en attente à portée de la main, dans une entaille ou logement 1m du corps par exemple (figure 1 et 2).

Revendications

1. Etau à plusieurs capacités d'ouverture maximum et à effets de serrage multiples, comprenant deux mâchoires et mors parallèles,dont l'une est fixe et l'autre mobile, des moyens complémentaires pour guider les mâchoires l'une par rapport à l'autre dans leurs déplacements parallèles, des moyens complémentaires pour commander et régler à volonté l'écartement des mâchoires, la mâchoire fixe étant montée pivotante sur un corps dont la partie inférieure présente une semelle ou des dispositions pour fixer l'étau sur un support, d'une manière orientable ou non, caractérisé en ce que la mâchoire mobile (2) et/ou la partie supérieure (9) du corps de l'étau portant la mâchoire fixe, sont agencées pour être déplacées angulairement par rapport au corps (1) qui la ou les porte, la partie supérieure (9) présentant des mâchoires fixes sur un ou plusieurs côtés, chaque mâchoire fixe se trouvant espacée différemment par rapport au centre de la tourelle, de sorte que pour chaque position angulaire prédéterminée de la tourelle, on modifie la capacité d'ouverture maximum entre les mâchoires fixe et mobile.

2. Etau selon 1, caractérisé en ce que la tourelle (9) présente une mâchoire fixe (9e) se trouvant en saillie, en élévation par rapport à la face supérieure de la tourelle, les deux faces avant et arrière de ladite mâchoire, équipées ou non de mors de serrage (9f), pouvant être utilisées alternativement en pivotant la tourelle de 180 degrés, en modifiant sensiblement la capacité d'ouverture maximum entre les mâchoires fixe et mobile.

3. Etau selon 1, caractérisé en ce que le positionnement ferme et précis de la tourelle (9) par rapport au corps, dans chaque position angulaire, est réalisé par une conformation complémentaire de la face supérieure du corps et de la face inférieure de la tourelle, qui présentent des plans inclinés correspondant (1i - 1j et 9c - 9d), ces plans inclinés étant fonction du nombre de positions angulaires à fixer.

4. Etau selon 1, caractérisé en ce que le positionnement ferme et précis de la tourelle (9) par rapport au corps (1), dans chaque position angulaire, est réalisé par une conformation complémentaire de la tourelle et du corps, qui présentent des pans ou points de positionnement complémentaires d'emboîtement, et autant de pans ou points qu'il y a de positions angulaires à fixer.

5. Etau selon 1, 2, 3, 4, caractérisé en ce qu'au moins une vis (10) assure l'assemblage et le blocage de la tourelle (9) avec sa mâchoire fixe, par rapport au corps (1), dans la position angulaire choisie.

6. Etau selon 1, 2, 3, 4 et 5, caractérisé en ce que la partie supérieure du corps (1) présente axialement une portée (1f) de centrage en saillie, pour le pivotement de la tourelle (9) qui présente un alésage (9a) correspondant à la portée, ou inversement ; la tourelle (9) étant bloquée en position angulaire choisie par un organe du type vis (10) à tête de manoeuvre (10b) se vissant dans le corps (1).

7. Etau selon 6, caractérisé en ce que la face supérieure de la vis (10) de blocage de la tourelle (9) sur le corps (1), présente une tête (10b) logée dans un évidement (9b) de la tourelle, et ladite tête étant conformée pour constituer une enclume.

8. Etau selon 1, caractérisé en ce que le corps (1) est ouvert sur deux ou trois côtés, dans une partie de sa hauteur, et présente un pivot central (21) autour duquel sont axés la mâchoire mobile (2) avec les moyens complémentaires de guidage, de commande et de réglage de l'écartement des mâchoires, plusieurs côtés de la partie supérieure du corps (1) présentant chacun, au niveau de la mâchoire mobile (2), une mâchoire fixe (9e - 9h - 9i - 9j) ou des parties fixes convenablement agencées, pour l'appui et la coopération avec la mâchoire pivotante (2), chaque mâchoire fixe ou partie fixe pouvant être espacée différemment par rapport au pivot central (21), de sorte que pour chaque position angulaire de la mâchoire mobile, on modifie la capacité d'ouverture maximum entre les mâchoires.

9. Etau selon 1, 2, 3, 4, 5, 6, 7, 8, du type dans lequel la mâchoire mobile (2) et le corps (1) présentent, en dessous des mors de serrage (2d - 9f), des formes en V femelles (2e - 9g), pour le serrage de pièces de diverses sections, notamment de révolution, caractérisé en ce que la tourelle (9) présente en plus de la forme en V femelle située sous un mors de serrage, une forme en V mâle (9h) exécutée sur l'une des faces latérales, de sorte que lorsque ledit Vé mâle de la tourelle (9) est placé en face du Vé femelle (2e) de la mâchoire mobile (2), on peut serrer une pièce polygonale, en particulier à section rectangulaire, dans une position inclinée.

10. Etau selon 1, dans lequel la mâchoire mobile (2) est éloignée ou rapprochée de la ou des mâchoires de la tourelle (9), dans une seule direction, par une tige (5) dont la partie filetée se visse dans un écrou (8) formé directement ou rapporté dans le corps (1), et dont la tête de manoeuvre (5a) tourne librement et avec retenue longitudinale dans un palier (4) de la mâchoire mobile (2), caractérisé en ce que la glissière est constituée par une barrette (3) de section rectangulaire ou ronde, plus large que la section rectangulaire (1e) exécutée en saillie dans l'ouverture du corps (1), et sur laquelle est fixée à demeure ou de manière démontable ladite barrette (3), afin de constituer une glissière de section en T ou analogue, pour le guidage à coulissement de la mâchoire mobile (2), de profil correspondant en section.

11. Etau selon 1 et 8 dans lequel la mâchoire mobile (2) peut prendre différentes positions angulaires par rapport au corps (1), par rotation autour du pivot central (21), caractérisé en ce que la glissière profilée (19) de guidage de la coulisse (2a) de la mâchoire mobile (2), est articulé sur le dit pivot, tandis que l'organe de manoeuvre de la mâchoire mobile (2) est une tige (20) dont une extrémité (20a) est axée sur le pivot (21), et dont la partie filetée coopère avec un écrou de manoeuvre (22) tournant librement et avec retenue longitudinale, dans un palier (4) de la mâchoire

mobile (2).

12. Etau selon 1, 2, 3, 4, 5, 6, 7, 8, 9, 10, 11, caractérisé en ce qu'il reçoit une boîte à onglets (11), c'est à dire un accessoire composé d'une semelle (11a) de fixation sur l'étau, et de deux montants latéraux (11b) inclinés, de préférence à 45 degrés par rapport à l'axe longitudinal de la semelle, et constituant par leurs faces extérieures un V mâle ; ces montants (11b) étant partagés dans leur longueur par une fente (11c) de guidage pour une scie ou organe similaire, destiné à couper en biseau une pièce.

13. Etau selon 12, caractérisé en ce que la boîte à onglets (11) est fixée par vis centrale (13) ou autrement, à une extrémité (9b) de la tourelle (9), la face arrière de la boîte à onglets (11) étant en butée contre la face d'un décrochement (9k) de la tourelle, et la pièce qui doit être sciée en biseau est serrée entre la mâchoire mobile (2) et la face avant (11d) de la boîte à onglets qui présente de préférence un talon (11e) d'appui de la pièce, et constitue ainsi un mors à onglets.

14. Etau selon 1, caractérisé en ce que la boîte à onglets (11) est fixée sur la face supérieure de la mâchoire mobile (2) par vis centrale (13) ou autrement, de préférence avec un moyen de positionnement parallèle au mors, tel que talon arrière (11f) d'appui contre la face arrière de la mâchoire mobile (2) ; un des mors de serrage de la tourelle (9) recevant par vis (13) ou autrement, un mors à onglets (12) constitué d'une semelle (12a) d'appui sur le mors de la tourelle, et de deux montants latéraux (12b) inclinés à 45 degrés de préférence, par rapport à l'axe longitudinal de la semelle, les montants (12b) formant par leurs faces intérieures, un V femelle qui constitue avec le V mâle de la boîte à onglets (11), un étau d'angle pour le blocage de pièces devant être assemblées et travaillées dans des positions angulaires relatives.

15. Etau selon 1, caractérisé en ce que les faces supérieures de la mâchoire mobile (2) et l'une des mâchoires de la tourelle (9), sont équipées pour recevoir de manière démontable des pièces de conformation, en vue d'effectuer des cintrages, des cambrages, des redressages ou autres déformations, sur des barres coincées entre trois pièces de conformation dont deux sont positionnées latéralement sur l'une des mâchoires de la tourelle (9), et la troisième sur la mâchoire mobile (2), généralement dans l'axe médian, ou inversement.

16. Etau selon 15, caractérisé en ce que les pièces de conformation sont des galets à gorge (14) montés à rotation libre sur les mâchoires, par l'intermédiaire d'axes (17) à bille de retenue dans l'alésage correspondant des mâchoires.

17. Etau selon 1, caractérisé en ce que des moyens de mesure tels que graduations (24), sont prévus sur la coulisse (2a) de la mâchoire mobile (2), pour mesurer l'ouverture de serrage et les pièces serrées, et sur la face supérieure (2b) de la mâchoire mobile (2), pour mesurer des longueurs de coupe et autres dimensions utiles.

18. Etau selon 1, caractérisé en ce que le blocage de la tourelle (9) sur le corps (1), de la boîte à onglets (11) en V mâle, du mors à onglets (12) en V femelle, des pièces de conformation (14) et autres accessoires, est avantageusement réalisé par une même clé (25) du type clé mâle à pans, positionnée dans une gorge (1m) établie latéralement sur le corps (1) de l'étau, par exemple.

FIG.1

FIG.2

FIG.3

FIG.4

FIG.5

0032476

FIG.6

FIG.7

FIG.8

FIG.9

FIG.10

FIG.11